# DEMANDE DE BREVET EUROPEEN

(11) **EP 1 978 311 A2**
(43) Date de publication de la demande: **08.10.2008**
(21) Numéro de dépôt: 08007352.1
(22) Date de dépôt: 15.04.2008
(51) Int. Cl.: F24D 11/00, F24D 19/10

(54) **Système de chauffage autonome et indépendant d'une autre source d'énergie**

(30) Priorité: 14.03.2007 FR 0701820
(71) Demandeur: Baldo, Catherine, 83560 Rians (FR); Chassin, Christian, 83560 Rians (FR)
(72) Inventeur: Baldo, Catherine, 83560 Rians (FR); Chassin, Christian, 83560 Rians (FR)

(57) **Abrégé**

L'invention concerne un système de chauffage solaire et de production d'eau chaude sanitaire indépendant d'une autre source d'énergie avec stockage de longue durée (intersaison) et gestion centralisée des productions et utilisations utilisant un fluide caloporteur résistant aux hautes températures. Il est composé d'au moins un réservoir de stockage intersaison de longue durée (R1) de fluide caloporteur, d'un système de gestion centralisé qui optimise la production et l'utilisation en fonction de paramètres déterminés, d'un système de vidange et remplissage automatique (4), d'un ensemble de vannes motorisées et de pompes de circulation piloté par le système de gestion. Il est raccordé au réseau de chauffage (2) (type plancher chauffant, radiateurs, ventilo-convecteurs, etc.). Les capteurs solaires thermiques (1) réchauffent le fluide caloporteur qui peut être utilisé soit de suite pour alimenter le réseau de chauffage (2), soit stocké dans les réservoirs (R1), soit dans un préparateur d'eau chaude sanitaire (3). En l'absence de production solaire, le système de gestion utilise le fluide stocké pour répondre aux demandes de chauffage. Il peut être utilisé pour le chauffage individuel, collectif ou d'eau chaude sanitaire.

## Description

L'invention présentée concerne un système de chauffage solaire et de production d'eau chaude sanitaire indépendant d'une autre source d'énergie comportant au moins un capteur solaire, au moins un réservoir de stockage intersaison de longue durée, permettant une utilisation de la chaleur stockée différée dans le temps, un fluide caloporteur résistant aux hautes températures, un système de régulation et de pilotage centralisé et automatisé, un système de gestion des montées en températures et en pression et un ballon avec au moins un échangeur pour la production d'eau chaude sanitaire.

Les systèmes existants aujourd'hui se caractérisent comme une aide au chauffage traditionnel et non comme un chauffage solaire pouvant être utilisé seul. Ils ne peuvent donc pas être utilisés indépendamment d'un autre type de chauffage utilisant une énergie traditionnelle.
Par exemple, dans le document EP1450108, il a été proposé une installation combinée de chauffage solaire et de production d'eau chaude sanitaire fonctionnant à la fois avec l'énergie solaire **et** des moyens auxiliaires de chauffage. Il en est de même pour les méthodes proposées dans les documents DE19927027 et DE4333829 par exemple.
Dans un document W00204873, il s'agit plus d'une méthode de contrôle de l'environnement qu'un véritable chauffage solaire.
Le document EP1245906 présente un système de chauffage central par radiateurs composé de deux sous-systèmes pouvant fonctionner seuls ou ensemble. Le premier sous système peut être alimenté par l'énergie solaire, une installation de géothermie ou de l'électricité produite par une installation biogaz, et fonctionne seul en période de température intermédiaire (mi-saison) et le second sous système, utilisé en période froide, produit de la chaleur grâce à l'électricité, celle-ci pouvant être produite par une éolienne, une installation biogaz ou une centrale hydroélectrique et les radiateurs à accumulation la restitue. Le système utilise donc plusieurs énergies, notamment électrique, les températures de fonctionnement sont celles habituellement utilisées dans les installations existantes (inférieures à 90°C) et il n'y a pas de stockage de la chaleur sur une longue période pour une utilisation différée.
Le document FR 2870928 décrit un procédé de réchauffage du fluide le plus froid, dans un système de chauffage central utilisant une énergie fossile et l'énergie solaire en complément. Les températures de fonctionnement sont basses comme précisé dans le titre et il n'existe pas de stockage thermique de longue durée permettant une utilisation différée de l'énergie solaire accumulée.
Le document US 4070870 décrit un système de chauffage et de climatisation utilisant une machine dite « à absorption » et l'énergie solaire en complément. La température du fluide chauffé par l'énergie solaire est raugmentée par une pompe à chaleur classique avant d'être utilisé par la machine dite « à absorption ». Ce n'est donc pas un système de chauffage indépendant d'une autre énergie. Ses températures de fonctionnement restent inférieures à 90°C et il n'existe pas de stockage thermique de longue durée permettant une utilisation différée de l'énergie solaire accumulée.

Les systèmes actuels, dit « systèmes combinés » ou « Combi » fonctionnent de la façon suivante : un ou plusieurs capteurs solaires thermiques sont associés à un ballon dit solaire de forte capacité (750 litres et plus par exemple) équipé d'échangeurs et à une chaudière fonctionnant avec une énergie traditionnelle alimentant le réseau de chauffage central. Un fluide caloporteur aqueux (eau +glycol en dilution variable) circule entre les capteurs solaires et les échangeurs du ballon solaire et vient réchauffer l'eau contenue dans le ballon qui sera envoyée dans la chaudière puis dans le réseau de chauffage central. La chaudière consomme moins d'énergie traditionnelle lorsqu'elle bénéfice de l'apport solaire. Par contre, elle va consommer plus lorsqu'elle ne bénéficiera pas de l'énergie solaire puisqu'elle devra réchauffer une masse plus importante que cette d'un circuit de chauffage (250 litres en moyenne).
Dès lors, il devient évident qu'il n'y a aucun intérêt à surdimensionner le stockage solaire, les bénéfices réalisés en période de production solaire étant rapidement annulés par les coûts de réchauffage par une énergie traditionnelle lorsqu'il n'y a pas de production solaire.
Ainsi, aucun stockage intersaison n'est envisageable avec les systèmes existants.

Des problèmes techniques inhérents aux hautes températures (proches des températures d'ébullition) associés à l'utilisation de fluide caloporteur aqueux, rencontrés sur les installations solaires limitent le nombre de capteurs solaires thermiques utilisés. Il faut donc prévoir un système d'arrêt de la production solaire afin d'éviter les montées à très hautes températures et pression qui endommageraient l'installation.

Dans les systèmes existants, la production et l'utilisation des 2 énergies (solaire et traditionnelle) sont gérées indépendamment. L'énergie traditionnelle est gérée par un système de régulation souvent intégré à la chaudière et la production solaire est gérée par un système indépendant. La production solaire et traditionnelle et la demande de chauffage ne peuvent donc pas être valablement optimisées.

L'on retient donc 4 principaux problèmes :
Les systèmes existants ne sont pas des systèmes de chauffage solaire indépendants d'une autre source d'énergie.
Il n'existe aucun système de stockage intersaison de longue durée.
Il n'existe pas de gestion centralisée permettant une optimisation de la production et de l'utilisation.
Les contraintes liées à l'utilisation de fluide caloporteur aqueux limitent le nombre et la puissance des capteurs solaires utilisés.

Le système décrit ci-après se définit comme un véritable chauffage solaire pouvant être utilisé sans recours à une autre source d'énergie, possédant un stockage intersaison de longue durée permettant une utilisation de la chaleur stockée différée dans le temps et une gestion centralisée des productions et utilisations, utilisant un fluide caloporteur ayant des spécificités physico-chimiques précises, supportant notamment des températures de fonctionnement élevées, chauffé uniquement par l'énergie solaire et circulant dans l'ensemble des éléments du système de chauffage.

Il est conçu pour alimenter un réseau de chauffage central à eau chaude (ou autres fluides caloporteurs), pour stocker la chaleur produite, la maintenir en température et l'utiliser de façon différée sur une longue période. Il peut aussi être couplé à un générateur de chaleur traditionnel (chaudière gaz, fioul ou électrique etc) pour assurer une continuité de chauffage en cas d'épuisement des réserves.

Le principe est donc de constituer des stocks de fluide caloporteur à haute température, de les maintenir en température uniquement grâce à l'énergie solaire pour les utiliser en période de chauffage.

Le système est composé de capteurs solaires thermiques à hauts rendements (1) permettant de chauffer un fluide caloporteur qui circule, grâce à une pompe de circulation (P1) adaptée dont la vitesse et le débit sont pilotés en fonction de la température à la sortie des capteurs solaires (1), pour réchauffer progressivement les réservoirs de stockage thermiques intersaison de longue durée (R1 à Rx) dont la capacité totale aura été déterminée en fonction de l'installation à chauffer et du degré d'autonomie souhaité par l'utilisateur.

Les réservoirs de stockage thermiques intersaison de longue durée (R1 à Rx) sont multiples et de capacité de l'ordre de 100 litres unitaires par exemple, afin d'accélérer les montées et le maintien en température du fluide caloporteur.
Les réservoirs de stockage thermiques intersaison de longue durée (R1 à Rx) sont en tout matériau conservant la chaleur et résistant aux hautes températures. Leur partie externe est parfaitement isolée.
Ils peuvent être enterrés ou installés en locaux techniques, ou autres.

Le système est raccordé à un réseau de chauffage (2) (de type plancher chauffant, radiateurs, ventilo-convecteurs ou aérothermes, par exemple, etc... ) utilisant un fluide caloporteur chaud. La circulation dans le réseau chauffage est assurée par une pompe de circulation (P2) dont la vitesse et le débit sont pilotés par le système de régulation en fonction d'une température ambiante intérieure (capteur de température SAI) et/ou extérieure (capteur de température SAE).

Le système est raccordé à un préparateur d'eau chaude sanitaire à échangeur (3), une pompe de circulation (P3) assure la distribution du fluide caloporteur vers son primaire.

Un système de régulation centralise l'ensemble des informations nécessaires à la gestion optimisée du système. Ce système possède une alimentation électrique de secours (batterie, panneaux photovoltaïques ou autre dispositif produisant de l'électricité). Grâce à des capteurs de températures (S1), Il enregistre la température à la sortie des capteurs solaires (1), la température du haut (capteur de températures SH1 à x) et du bas (capteur de températures SB1 à x) de chacun des réservoirs de stockage thermiques intersaison de longue durée (R1 à Rx), la température de départ vers le circuit de chauffage (capteur de température S2), la température de retour du circuit de chauffage (capteur de température S4), la température ambiante (capteur de température SAI), la température extérieure (capteur de température SAE), les pressions (capteur de température CP1) etc. L'utilisateur peut entrer ses consignes de chauffage (journalières, hebdomadaires etc). Le système de régulation définit, en fonction de l'ensemble des données et des consignes, le fonctionnement optimum du système : stockage seul, stockage et alimentation du réseau de chauffage, alimentation du réseau de chauffage seul, production d'eau chaude sanitaire ou combinaison des trois utilisations, en pilotant les vannes motorisées et débits des pompes de circulation. La vitesse de la pompe de circulation (P1) est pilotée en fonction de la température du capteur de température S1 et cette de la pompe de circulation (P2) par les capteurs de températures (SAE) et/ou (SAI). Le système adapte en permanence le fonctionnement de l'installation en fonction de l'ensemble des paramètres, des différentes données.

Si un générateur de chaleur traditionnel (5) existe, il est pris en compte dans cette optimisation. Ainsi, lorsqu'une demande de chauffage est enregistrée, le système de régulation déterminera la réponse la mieux adaptée en fonction des ressources disponibles à ce moment. Si la production solaire est en cours et est suffisante, elle sera partiellement ou totalement utilisée après mélange et le surplus éventuel sera stocké, si la production solaire n'est pas suffisante ou nulle (la nuit) et si la température des réservoirs de stockage thermiques intersaison de longue durée (R1 à Rx) mesurée par les capteurs de températures (SH1 à SHx) est supérieure à la température de consigne du départ chauffage, la demande sera satisfaite en puisant dans les réservoirs de stockage thermiques intersaison de longue durée (R1 à Rx), et si la température des réservoirs de stockage thermiques intersaison de longue durée n'est pas suffisante, y compris pour une aide au retour du circuit chauffage, alors le générateur de chauffage traditionnel (5), si il existe, assurera le complément de température. Cette description du fonctionnement n'est pas exhaustive.

Les températures atteintes grâce à l'énergie solaire pouvant être très élevées, un ensemble de dispositifs de sécurité est obligatoire (vases d'expansion correctement dimensionnés, soupapes de sécurité, purgeurs d'air automatiques, clapets de non retour etc....) et assurent un premier niveau de sécurité.
Il peut être nécessaire d'arrêter la production solaire, un système de vidange et remplissage automatique (4) des capteurs solaires (1) est installé et est piloté en fonction des pressions (capteur de pression CP1) et de la température (capteur de température S1) à la sortie des capteurs solaires (1). En cas de forte montée en pression et/ou de température extrême, le système (4) vidange les capteurs solaires (1) dans au moins un réservoir (RD1) prévu à cet effet. La vidange peut être partielle, sans arrêt du système, ou complète avec arrêt du système. Dès le retour à une pression déterminée et/ou à une température précisée, le système (4) rempliera les capteurs solaires (1) à l'aide d'une pompe (PR1) spécialement adaptée à cet usage, le système global restant à l'arrêt le temps nécessaire au remplissage et à la purge de l'air. Le réservoir (RD1) contient aussi une réserve de fluide caloporteur avec indicateur de niveau. En cas de pression inférieure à une pression de consigne de sécurité (PCS) (manque de fluide caloporteur) le système de chauffage solaire est en arrêt d'urgence. Le système (4) permet aussi de gérer les risques liés aux problèmes de continuité d'alimentation en électricité, l'électrovanne (EVD) étant alimentée par l'alimentation de secours de la régulation. Le système (4) est dimensionné en fonction de l'installation.

Un dispositif de séparateur hydraulique (SH) est utilisé pour éviter les problème générés par l'utilisation de plusieurs pompes de circulation (panne, perte de puissance, courants parasites, variations anormales des débits et pression différentiels, etc.). On peut également séparer les circuits grâce à un échangeur mais les rendements seront moins importants.

Le fluide caloporteur utilisé possède des caractéristiques physico-chimiques précises: température d'ébullition élevée (supérieure à 110C), faible volatilité, coefficient de viscosité cinématique et coefficient de dilatation les plus faibles possibles, pour permettre l'utilisation à de très hautes températures pour accroître le degré d'autonomie des réservoirs de stockage thermiques intersaison de longue durée (R1 à Rx).

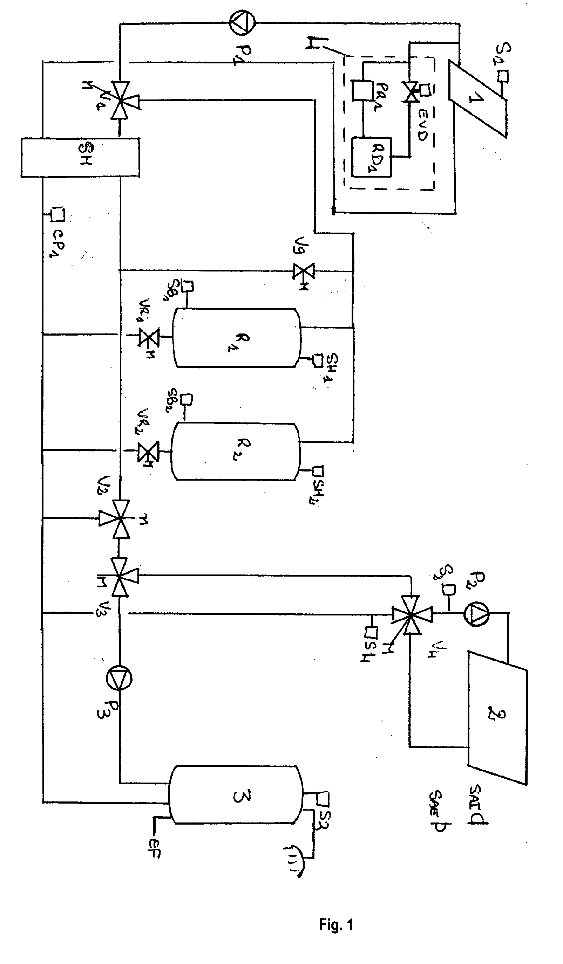

L'installation représentée à la figure 1 montre une application du système de chauffage solaire utilisé comme moyen unique de chauffage d'un bâtiment.
Elle comporte, comme les installations connues, au moins un capteur solaire (1) à haut rendement, un plancher chauffant (2) et un ballon préparateur d'eau chaude sanitaire muni d'au moins un échangeur et d'une résistance électrique (3). Elle comporte en plus, au moins un réservoir de stockage thermique intersaison de longue durée permettant une utilisation différée dans le temps de l'énergie stockée (R1) d'une capacité unitaire d'environ 100 litres par exemple, d'une régulation centralisée gérant la totalité de l'installation de chauffage (non représentée) et d'un système de vidange et remplissage automatique (4) des capteurs solaires (1). Le fluide caloporteur utilisé dans le circuit entre capteur (1), réservoir (R1), plancher chauffant (2) et primaire (3) de l'eau chaude sanitaire possède les caractéristiques physico-chimiques décrites précédemment (voir supra). Des capteurs de température (S1, S2, S3, S4 etc.) et au moins un capteur de pression (CP1) mesurent les températures et les pressions à différents points de l'installation et transmettent les valeurs à la régulation centralisée qui pilote le système par l'intermédiaire de vannes motorisées (V1, V2, V3, V4, etc.) en fonction des valeurs relevées, des paramètres de base et des paramètres de l'utilisateur. Un capteur de température ambiante intérieure (SAI) et un capteur de température extérieure (SAE) définissent les demandes de chauffage.

Dans une première hypothèse, une demande de chauffage est déclenchée par le capteur de température SAI ou SAE, une température T1 relevée par le capteur de température (S1) placé à la sortie du capteur solaire (1) est supérieure à une température T2 relevée par le capteur de température (S2) de départ du plancher chauffant (2) et inférieure à une température T3 relevée par un capteur de température (SH1) placée en haut du réservoir de stockage thermique intersaison de longue durée (R1). La pompe de circulation (P1) est en fonction, la vanne de distribution (V1) s'ouvre vers le circuit plancher chauffant. La vitesse de la pompe de circulation (P1) est déterminée par la régulation en fonction de la température T1. La vanne de mélange (V2) est en mélange, la pompe de circulation (P2) est en fonction et sa vitesse est déterminée à partir des capteurs de températures SAI et/ou SAE et la vanne (V3) est ouverte vers le plancher chauffant (2). La production solaire est envoyée directement vers le circuit plancher chauffant (2).

Dans une seconde hypothèse, une demande de chauffage est déclenchée par le capteur de température SAI ou SAE, une température T1 relevée par le capteur de température (S1) placée à la sortie du capteur solaire (1) est supérieure à une température T2 relevée par le capteur de température (S2) de départ du plancher chauffant (2) et supérieure à une température T3 relevée par un capteur de température (SH1) placé en haut du réservoir de stockage thermique intersaison de longue durée (R1). La pompe de circulation (P1) est en fonction, la vanne de distribution (V1) distribue le fluide vers le circuit plancher chauffant (2) et vers le réservoir de stockage thermique intersaison de longue durée (R1) en fonction des valeurs des capteurs de température SAE et SAI. La vitesse de la pompe de circulation (P1) est déterminée par la régulation en fonction de la température T1. La vanne de mélange (V2) est en mélange, la pompe de circulation (P2) est en fonction et sa vitesse est déterminée à partir des capteurs de températures SAI et/ou SAE et la vanne (V3) est ouverte vers le plancher chauffant (2). La production solaire est à la fois envoyée vers le circuit plancher chauffant (2) et vers le(s) réservoir(s) de stockage thermique intersaison de longue durée (R1 à Rx).

Dans une troisième hypothèse, une demande de chauffage est déclenchée par le capteur de température SAI ou SAE, la température T1 relevée par le capteur de température (S1) placé à la sortie du capteur solaire (1) est inférieure à la température T2 relevée par le capteur de température (S2) de départ du plancher chauffant (2) et inférieure à la température T3 relevée par le capteur de température (SH1) placé en haut du réservoir de stockage thermique intersaison de longue durée (R1) et la température T3 relevée par un capteur de température (SH1) placé en haut du réservoir de stockage thermique intersaison de longue durée (R1) est supérieure à la température T2 relevée par le capteur de température (S2) de départ du plancher chauffant (2). La pompe de circulation (P1) est à l'arrêt, la vanne de distribution (V1) est fermée. La production solaire est arrêtée. La vanne (V9) s'ouvre pour envoyer le fluide stocké dans le réservoir de stockage thermique intersaison de longue durée (R1) vers le circuit plancher chauffant (2) et la vanne VR1 s'ouvre pour le passage du retour.

Dans une quatrième hypothèse, il n'y a pas de demande de chauffage, la température T1 relevée par le capteur de température (S1) placé à la sortie du capteur solaire (1) est supérieure à la température T3 relevée par le capteur de température (SH1) placé en haut du réservoir de stockage thermique intersaison de longue durée (R1). La pompe de circulation (P1) est en fonction, la vanne de distribution (V1) distribue le fluide vers le(s) réservoir(s) de stockage de stockage thermique intersaison de longue durée (R1 à Rx). La production solaire est entièrement stockée.

Dans une cinquième hypothèse, il n'y a pas de demande de chauffage, la température T3 relevée par un capteur de température (SH1) placé en haut du réservoir de stockage thermique intersaison de longue durée (R1) est supérieure à une température de consigne (130°c par exemple) et la température T1 relevée par le capteur de température (S1) placé à la sortie du capteur solaire (1) est supérieure à la température T4 relevée par le capteur de température placé en haut de ballon sanitaire (S3). La pompe de circulation (P1) est en fonction, la vanne de distribution (V1) distribue le fluide vers le ballon préparateur d'eau chaude sanitaire (3) par la vanne (V2) en mélange et la vanne (V3) ouverte et la pompe de circulation (P3) en fonctionnement. Le(s) réservoir(s) de stockage thermique intersaison de longue durée (R1) est en température et il n'y a pas de demande de chauffage, la production solaire est utilisée pour chauffer le primaire du préparateur d'eau chaude sanitaire (3).

Dans une sixième hypothèse, il n'y a pas de demande de chauffage, la température T3 relevée par un capteur de température (SH1) placé en haut du réservoir de stockage thermique intersaison de longue durée (R1) est supérieure à une température de consigne (130°c par exemple), la température T1 relevée par le capteur de température (S1) placé à la sortie du capteur solaire (1) est supérieure à une température de consigne (150°C par exemple), la température T4 relevée par le capteur de température (S3) placé en haut de ballon sanitaire est supérieure à une température de consigne (80°C par exemple). La production solaire est arrêtée, l'électrovanne (EVD) de décharge s'ouvre, le fluide contenu dans le capteur solaire (1) est vidangé dans le réservoir de décharge (RD1).
Une variante permet cette ouverture quand une montée en pression enregistrée par le capteur de pression (CP1) est supérieure à une valeur de consigne (PC1).
Lorsque la valeur relevée par le capteur de pression (CP1) est comprise entre une pression de consigne (PC2) et une fois et demi cette valeur, le circulateur (PR1) est en service, l'électrovanne (EVD) est fermée, le fluide est renvoyé dans le capteur solaire (1).

Dans une septième hypothèse, l'électrovanne (EVD) est alimentée en électricité par la régulation. Si une coupure de l'alimentation électrique du réseau est enregistrée, et si la température T1 relevée par le capteur de température (S1) placé à la sortie du capteur solaire (1) est supérieure à une température de consigne (150°C par exemple) et/ou si la valeur relevée par le capteur de pression (CP1) est supérieure à la pression de consigne (PC1), alors l'électrovanne (EVD) de décharge est ouverte, le fluide contenu dans le capteur solaire (1) est vidangé dans le réservoir de décharge (RD1). C'est une décharge de sécurité.

Dans une huitième hypothèse, la température T1 relevée par le capteur de température (S1) placé à la sortie du capteur solaire (1) est inférieure à la température T2 relevée par le capteur de température (S2) de départ du plancher chauffant (2) et inférieure à la température T3 relevée par le capteur de température (SH1) placé en haut d'un réservoir de stockage thermique intersaison de longue durée (R1). La production solaire est stoppée. La pompe de circulation (P1) est arrêtée et la vanne (V1) est fermée.

Dans une neuvième hypothèse, il existe plusieurs réservoirs de stockage thermiques intersaison de longue durée (R1 à Rx). La régulation doit déterminer le réservoir de stockage thermique intersaison de longue durée (Rx) à compléter en température. Elle compare les valeurs relevées par les capteurs de températures placées en haut de chacun des réservoirs de stockage thermique intersaison de longue durée (SH1 à SHx) et déterminer la valeur minimum. Le réservoir présentant cette valeur minimum sera le lieu de stockage jusqu'à ce que le différentiel entre la nouvelle valeur relevée par le capteur de température (SHx) en haut de ce réservoir de stockage thermique intersaison de longue durée (Rx) et la température T1 relevée par le capteur de température (S1) placé à la sortie du capteur solaire (1) soit inférieure ou égale à 10°C environ.

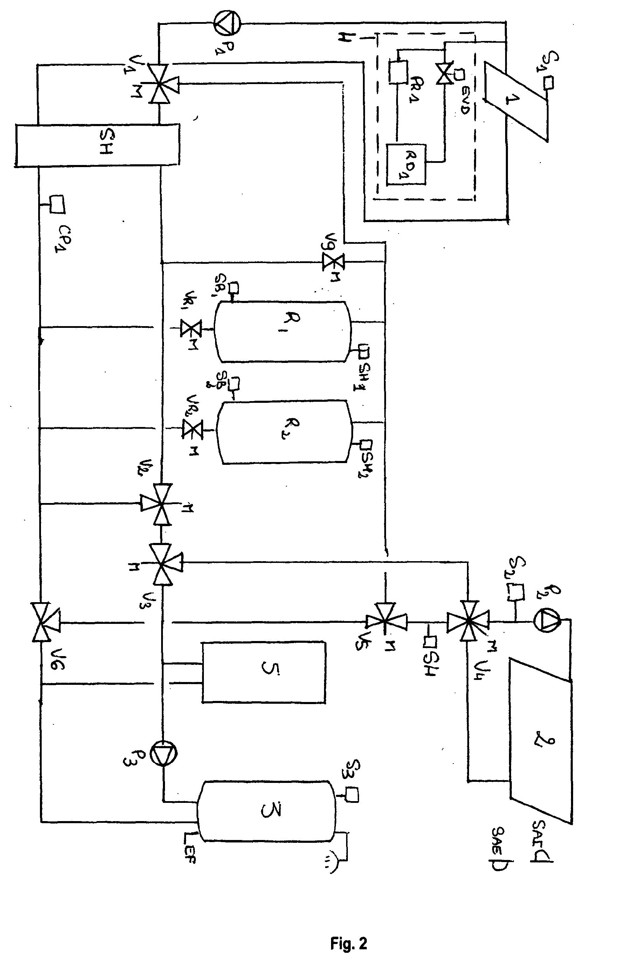

L'installation représentée à la figure 2 montre une application du système de chauffage solaire combiné avec une chaudière à énergie traditionnelle.
Elle comporte, comme les installations connues et l'installation précédente, au moins un capteur solaire (1) à haut rendement, un plancher chauffant (2) et un ballon préparateur d'eau chaude sanitaire muni d'au moins un échangeur et d'une résistance électrique (3). Elle comporte en plus, au moins un réservoir de stockage thermique intersaison de longue durée intersaison (R1) d'une capacité unitaire d'environ 100 litres, par exemple, une régulation centralisée gérant la totalité de l'installation de chauffage (non représentée), un système de vidange et de remplissage automatique (4) des capteurs solaires (1) et une chaudière à énergie traditionnelle (fioul, gaz, électrique, bois etc) (5). Le fluide caloporteur utilisé dans le circuit entre capteur solaire (1), réservoir de stockage thermique intersaison de longue durée (R1), plancher chauffant (2), primaire de l'eau chaude sanitaire (3) et chaudière (5) possède les caractéristiques physico-chimiques décrites précédemment (voir supra). Des capteurs de température (S1, S2, S3,S4 etc.) et au moins un capteur de pression (CP1) mesurent les températures et les pression à différents endroits de l'installation et transmettent les valeurs à la régulation centralisée qui pilote le système par l'intermédiaire de vannes motorisées (V1, V2, V3, V4, V5, V6 etc.) en fonction des valeurs relevées, des paramètres de base et des paramètres de l'utilisateur. Un capteur de température ambiante intérieure (SAI) et un capteur de température extérieure (SAE) caractérisent les demandes de chauffage.
Les neuf hypothèses développées ci-dessus s'appliquent à l'identique. Deux hypothèses supplémentaires viennent s'ajouter.

Dans une première hypothèse supplémentaire, une demande de chauffage est déclenchée par la capteur de température SAI ou SAE, la température T1 relevée par le capteur de température (S1) placé à la sortie du capteur solaire (1) est inférieure à la température T2 relevée par le capteur de température (S2) de départ du plancher chauffant (2), la température T3 relevée par le capteur de température (SH1) placé en haut du réservoir de stockage thermique intersaison de longue durée (R1) est inférieure à la température T2 relevée par le capteur de température (S2) de départ du plancher chauffant (2) et est supérieure à la température T5 relevée par le capteur de température (S4) placé sur le retour du circuit plancher chauffant (2). La vanne V5 s'ouvre vers le réservoir de stockage thermique intersaison de longue durée (R1), la vanne V6 s'ouvre vers la chaudière (5) et la vanne V3 est fermée vers le réservoir de stockage thermique intersaison de longue durée (R1). La production solaire stockée aide la chaudière traditionnelle (5) par le retour chauffage.

Dans une seconde hypothèse supplémentaire, une demande de chauffage est déclenchée par le capteur de température SAI ou SAE, la température T1 relevée par le capteur de température (S1) placé à la sortie du capteur solaire (1) est inférieure à la température T2 relevée par le capteur de température (S2) de départ du plancher chauffant (2), la température T3 relevée par un capteur de température (SH1) placé en haut du réservoir de stockage thermique intersaison de longue durée (R1) est inférieure à la température T2 relevée par le capteur de température (S2) de départ du plancher chauffant (2) et est inférieure à la température T5 relevée par le capteur de température (S4) placée sur le retour du circuit plancher chauffant (2). La vanne V5 s'ouvre vers la vanne (V6) et les vannes (V3) et (V6) s'ouvre vers la chaudière (5). Le système de chauffage solaire est entièrement isolé et la chaudière (5) réchauffe le circuit chauffage (2) de façon traditionnelle.

Ces hypothèses ne sont pas exhaustives.

Ce système peut être utilisé, par exemple, pour le chauffage d'une maison individuelle.

Après réalisation de l'étude de chauffage, l'installation solaire est dimensionnée en fonction des résultats de l'étude et des demandes de l'utilisateur en terme d'autonomie de fonctionnement. Ainsi, la capacité des réserves est déterminée puis le nombre de capteurs solaires thermiques ainsi que les dimensionnements des pompes de circulation et des dispositifs de sécurité.
L'utilisateur pourra choisir d'installer un générateur de chaleur traditionnel immédiatement ou plus tard. Il pourra de même choisir de n'utiliser que le chauffage solaire alimentant son plancher chauffant, par exemple, et utiliser, après épuisement des réserves (en supposant qu'elles ne soient pas reconstituées), une cheminée ou autre.
Dans le cas d'une installation de chauffage avec des radiateurs, les réservoirs intersaisons seront d'une capacité totale plus importante qu'avec un plancher chauffant.

Ce système peut être connecté à n'importe quel type de générateur de chauffage : chaudière bois, chaudière gaz, chaudière fioul, pompe à chaleur, etc., par exemple.

Ce système peut assurer une aide à la climatisation, en été, associé à une machine à absorption (pompe à chaleur gaz) par l'intermédiaire d'un échangeur de chaleur, par exemple.

II peut être de même utilisé pour fournir de grandes quantités d'eau chaude sanitaire (ou d'eau chaude industrielle), les réservoirs de stockages étant utilisés uniquement dans ce but.

Il peut être identiquement utilisé pour fournir le chauffage d'immeubles industriels ou de bureaux, etc.

## Revendications

1. Système de chauffage solaire comportant au moins un capteur solaire (1) **caractérisé en ce qu'**il soit indépendant d'une autre source d'énergie et qu'il possède au moins un réservoir de stockage thermique intersaison de longue durée permettant une utilisation différée dans le temps de l'énergie stockée (R1 à Rx) et utilisant un fluide caloporteur supportant les hautes températures et chauffé uniquement par l'énergie solaire.

2. Système de chauffage solaire indépendant d'une autre source d'énergie selon la revendication 1 **caractérisé en ce que** le fluide caloporteur supportant les hautes températures a une température d'ébullition supérieure à 110°C.

3. Système de chauffage solaire indépendant d'une autre source d'énergie selon les revendications 1 à 2, **caractérisé en ce que** le fluide caloporteur circule dans l'ensemble des éléments du système de chauffage.

4. Système de chauffage solaire indépendant d'une autre source d'énergie selon les revendications 1 à 3, **caractérisé en ce qu'**il possède un système de régulation centralisé et automatisé contrôlant à la fois la régulation du circuit de production d'énergie solaire et les utilisations dans le circuit de chauffage.

5. Système de chauffage solaire indépendant d'une autre source d'énergie selon les revendications 1 à 4 **caractérisé en ce qu'**il existe un système de vidange et de remplissage automatique (4) des capteurs solaires comportant au moins un réservoir de décharge (RD1).

6. Système de chauffage solaire indépendant d'une autre source d'énergie selon les revendications 1 à 5, **caractérisé en ce qu'**un capteur de température (S1) enregistre la température à la sortie des capteurs solaires (1), que d'au moins un capteur de température (SH1 à SHx) enregistre la température du haut de chacun des réservoirs de stockage thermiques intersaison de longue durée (R1 à Rx), qu'au moins un capteur de température (SB1 à SBx) enregistre la température du bas de chacun des réservoirs de stockage thermiques intersaison de longue durée (R1 à Rx), qu'un capteur de température (S2) enregistre la température de départ vers le circuit de chauffage (2), qu'un capteur de température(S3) enregistre la température du primaire eau chaude sanitaire (3), qu'un capteur de température (S4) enregistre la température de retour du circuit de chauffage (2), qu'un capteur de température (SA1) enregistre la température ambiante intérieure, qu'un capteur de température (SAE) enregistre la température extérieure et qu'au moins un capteur de pression enregistre la pression de l'installation.

7. Système de chauffage solaire indépendant d'une autre source d'énergie selon les revendications 1 à 6 **caractérisé en ce que** le système de régulation comprend une pompe de circulation (P1) dont la vitesse est pilotée par la température T1 enregistrée par le capteur de température (S1) et une pompe de circulation (P2) dont la vitesse est pilotée en fonction de la température T2 du capteur de température (SAE) et/ou (SAI).

8. Système de chauffage solaire indépendant d'une autre source d'énergie selon les revendications 1 à 7, **caractérisé en ce qu'**en l'absence d'une demande de chauffage (capteur de températures SAE ou/et SAI), qu'une température T3 relevée par un capteur de température (SH1) placé en haut du réservoir de stockage thermique intersaison de longue durée (R1) soit supérieure à une température de consigne (130°C par exemple), qu'une température T1 relevée par le capteur de température (S1) placé à la sortie du capteur solaire (1) soit supérieure à une température de consigne (150°C par exemple) et qu'une température T4 relevée par le capteur de température (S3) placé en haut de ballon sanitaire (3) supérieure à une température de consigne (80°C par exemple), la production solaire est arrêtée, l'électrovanne (EVD) de décharge s'ouvre, le fluide contenu dans le capteur solaire (1) est vidangé dans le réservoir de décharge (RD1).

9. Système de chauffage solaire indépendant d'une autre source d'énergie selon les revendications 1 à 8 **caractérisé en ce que** lorsque la pression relevée par le capteur de pression (CP1) est supérieure à une pression de consigne (PC1), l'électrovanne (EVD) de décharge s'ouvre, le fluide contenu dans le capteur solaire (1) est vidangé dans le réservoir de décharge (RD1).

10. Système de chauffage solaire indépendant d'une autre source d'énergie selon les revendications 1 à 9, **caractérisé en ce que** l'électrovanne (EVD) est alimentée en électricité par l'alimentation de secours de la régulation, et qu'en cas de coupure de l'alimentation électrique du réseau et que si la température T1 relevée par le capteur de température (S1) placé à la sortie du capteur solaire (1) est supérieure à une température de consigne (150°C par exemple) et que si la valeur relevée par le capteur de pression (CP1) est supérieure à une pression de consigne (PC1), alors l'électrovanne (EVD) de décharge s'ouvre, le fluide contenu dans le capteur solaire (1) est vidangé dans le réservoir de décharge (RD1) pour une décharge de sécurité.

11. Système de chauffage solaire indépendant d'une autre source d'énergie selon les revendications 1 à 10 **caractérisé en ce que** quand la valeur relevée par le capteur de pression (CP1) est comprise entre 1 fois et 1 fois et demi une pression de consigne (PC2), alors l'électrovanne (EVD) est fermée, le circulateur (PR1) est en service et le fluide est rechargé dans le capteur solaire (1).

12. Système de chauffage solaire indépendant d'une autre source d'énergie selon les revendications 1 à 11, **caractérisé en ce que** le réservoir de stockage thermique intersaison de longue durée à compléter en température est déterminé en comparant les valeurs relevées par les capteurs de température (SH1 à SHx) placés en haut de chacun des réservoirs de stockage thermiques intersaison de longue durée (R1 à Rx) en sélectionnant le réservoir de stockage thermique intersaison de longue durée (R..) présentant cette valeur minimum jusqu'à ce que le différentiel entre la nouvelle valeur relevée par le capteur de température en haut de ce réservoir de stockage thermique intersaison de longue durée et la température T1 relevée par le capteur de température (S1) placé à la sortie du capteur solaire (1) soit inférieure ou égale à 10°C environ.

13. Utilisation du système de chauffage solaire indépendant d'une autre source d'énergie selon les revendications 1 à 12 **caractérisé en ce qu'**il peut alimenter directement tout réseau de chauffage utilisant un fluide caloporteur chaud (plancher chauffant, radiateurs, aérothermes, ventilo-convecteurs, etc).

14. Utilisation du système de chauffage solaire indépendant d'une autre source d'énergie selon les revendications 1 à 12 **caractérisé en ce qu'**il peut être couplé à tout type de générateur de chaleur complémentaire (chaudière bois, chaudière gaz, chaudière fioul, pompe à chaleur, machine à absorption, etc.) et pouvant être raccordé sur un réseau de chauffage par fluide caloporteur (plancher chauffant, radiateurs, aérothermes, ventilo-convecteurs, etc.).

15. Utilisation du système de chauffage solaire indépendant d'une autre source d'énergie selon les revendications 1 à 12 **caractérisé en ce qu'**il peut être couplé à tout type de générateur de froid complémentaire (pompe à chaleur, machine à absorption, etc.) pour produire du froid pour toute utilisation (climatisation, froid, etc....).
